# EUROPEAN PATENT SPECIFICATION

(11) **EP 0 437 190 B1**
(45) Date of publication and mention of the grant of the patent: **09.10.1996**
(21) Application number: 90850418.6
(22) Date of filing: 19.12.1990
(51) Int. Cl.: H01Q 21/24, H01Q 15/24

(54) **Polarization converter application for accessing linearly polarized satellites with single- or dual-circularly polarized earth station antennas**
Verwendung eines Polarisationswandlers für den Zugriff auf linearpolarisierte Satelliten mit einfach- oder dual zirkularpolarisierten Bodenstationsantennen
Application de convertisseur de polarisation pour accès à satellites à polarisation linéaire au moyen d'antennes terrestres à polarisation circulaire simple ou double

(30) Priority: 10.01.1990 US 463057
(43) Date of publication of application: 17.07.1991
(73) Proprietor: INTERNATIONAL TELECOMMUNICATIONS SATELLITE ORGANIZATION, Washington, D.C. 20008 (US)
(72) Inventor: English, William J., Derwood, Maryland 20855 (US); Viskum, Hans H., Rockville, Maryland 20850 (US)
(74) Representative: Axelsson, Rolf

(56) References cited:
- EP-A- 0 310 414
- EP-A- 0 416 264
- US-A- 3 357 013
- BBC RESEARCH DEPARTMENT REPORT. no. 7, July 1988, TADWORTH GB pages 1 - 10; MADDOCKS ET AL.: 'POLARISATION CONVERTERS FOR A DBS FLAT-PLATE ANTENNA '

## Description

### Background of the Invention

Transmission between satellites and earth stations is established by means of antennas which are either linearly or circularly polarized. In order to optimize satellite communication links, it is essential that the polarization of the earth station antenna be matched to the polarization of the satellite antenna. Thus, if circular polarization is employed on the satellite this is also the optimum for the earth station, and similarly for linear polarization. In many modern satellite communications systems the limited frequency resource is most efficiently used by employing dual, orthogonal polarization, and thus antenna polarization characteristics are of utmost importance in such systems.

If, e.g., a circularly polarized earth station antenna is being employed to receive a linearly polarized satellite signal, there will be a 3-dB power loss associated with the link due to the polarization mismatch. Moreover, if the satellite operates in dual-linear polarization, the interference between the two corresponding signals will be such as to prevent useful satellite communication.

If the above problems could be alleviated, earth stations, which often represent a significant investment, could be used for satellites other than those they were originally intended for, regardless of the polarization scheme. Additionally, if these problems could be solved in such a manner that alternative operation of an earth station in either circular or linear polarization is possible without significant additional cost, earth stations could be more readily designed to accommodate operations with both circularly and linearly polarized satellites. It would thus give the satellite operator greater flexibility, since satellites of differing polarization schemes could be substituted for each other during the life of the earth without degradation of communications.

BBC RESEARCH DEPARTMENT REPORT, no 7, July 1988, TADWORTH, GB. pages 1-10; MADDOCKS ET AL. "POLARISATION CONVERTERS FOR A DBS FLAT-PLATE ANTENNA" discloses the use of a meanderline polarizer to receive circularly polarized signals from a DBS satellite, converting the signals to linear polarization. The linearly polarized signals are then processed through linearly polarized elements. There is also discussion of the reverse conversion, i.e., using a meanderline polarizer to convert incoming linearly polarized signals to circular polarization. Meanderline polarizers have been known for decades, and the described antenna application utilizing a meanderline polarizer as part of its basic configuration will not represent a generally applicable solution to the above problem.

EP-A-0 416 264, which falls under the terms of Article 54(3) EPC, is directed to an adaptive polarization combining system which instantly tracks a variable polarization input signal and aligns the polarization of the receiving antenna to that of the incoming wave. The system is rather complicated and uses an arrangement of amplifiers, couplers, mixers and delay lines prior to a combining circuit.

It is therefore an object of the present invention to provide a technique by which dual-circularly polarized earth stations can be retro-fitted to access linearly polarized satellites with inexpensive and easily installed modifications to the existing earth station hardware, which are easily removed to recover the original configuration.

It is a further object of this invention to provide a means which allow, without significant additional expense or operational difficulty, earth stations to be designed and manufactured to accommodate either circularly or linearly polarized communications at any given time.

### Summary of the Invention

The above and other objects of the present invention are achieved by providing a power dividing (transmit) or power combining (receive) network in conjunction with differential phase shift circuits external to the existing feed system, to match a dual-circularly polarized earth station antenna to a linearly polarized satellite system without reconfiguration or change of the existing earth station feed to recover the 3-dB power loss on the transmit and receive links and avoid the interference between dual-linearly polarized signals which would otherwise occur.

The characteristic features of the apparatus and methods of the present invention are set forth in the appended claims.

### Brief Description of the Drawings

The invention will be more clearly understood from the following description in conjunction with the accompanying drawings, wherein:
Fig. 1 illustrates the use of a meander line polarizer in conjunction with a circularly polarized earth station antenna to access a linearly polarized satellite; and
Fig. 2 illustrates the use of a power dividing (transmit) and power combining (receive) network with associated differential phase shift circuits in accordance with the present invention.

### Detailed Description of the Invention

For the benefit of clarity, the following description of the invention is limited to the situation in which a linearly polarized signal is transmitted from a satellite and received by the circularly polarized earth station antenna to which the invention is applied. The opposite situation, i.e., when signals are transmitted from the earth station to the satellite, follows immediately from the discussion by applying the reciprocity theorem of electromagnetic field theory.

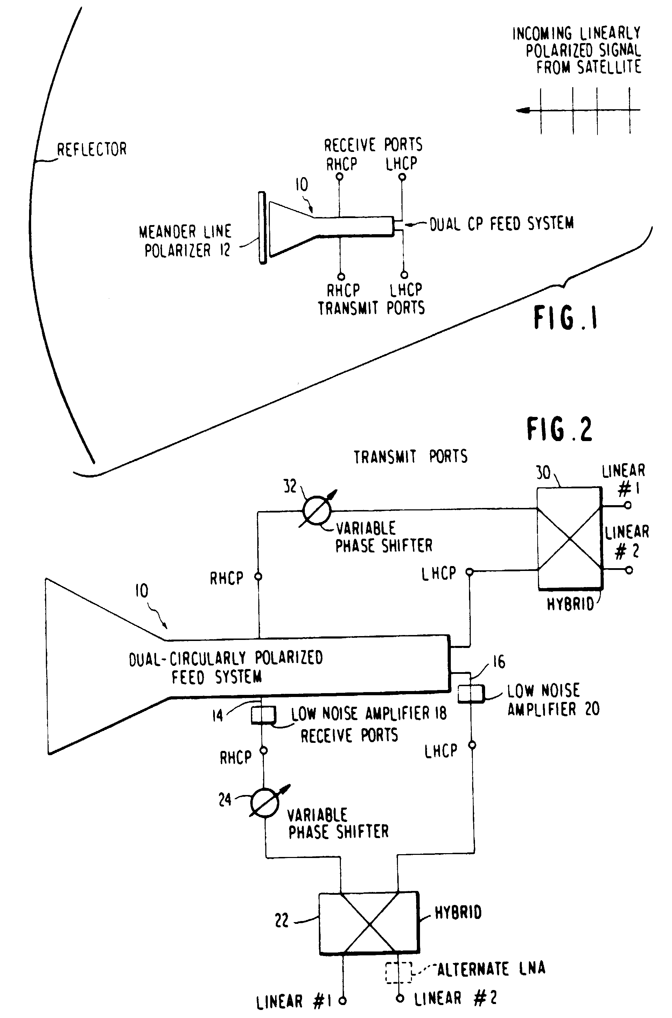

Fig. 1 illustrates the combination of a dual-circularly polarized earth station antenna feed system 10 and meander line polarizer 12 with 90° differential phase shift. The meander line polarizer 12, e.g., as described by Young, Robinson and Hacking in "Meander-Line Polarizer", IEEE Transactions on Antennas and Propagation, May 1973, pp. 376-378, converts the polarization of a linearly polarized plane wave, with its polarization aligned at an angle of 45° to the meander line, into a plane wave with circular polarization, provided the differential phase shift of the meander line polarizer is 90°. If two orthogonally linearly polarized plane waves which are both polarized at a 45° angle to the meander line are incident upon the polarizer, one will be converted into right hand circular polarization (RHCP) while the other will be converted into left hand circular polarization (LHCP). Thus, the two signals will still be orthogonal after transmission through the polarizer. If the angle is not 45°, then the transmitted signals will be elliptically polarized but still orthogonal.

Consider a satellite transmitting a linearly polarized signal to the ground. If a meander line polarizer is positioned in front of the feed of a circularly polarized earth station antenna at an arbitrary angle of rotation, it will convert the incoming signal into an elliptically polarized signal. This will be received by both the Right Hand Circular Polarization (RHCP) and Left Hand Circular Polarization (LHCP) ports of the feed system. By monitoring the power levels of these two signals while rotating the meander line polarizer in front of the feed, a position can be found at which one of the ports will show a maximum signal power level and the other at the same time a minimum. This corresponds to a 45° alignment of the polarizer with respect to the polarization of the incoming wave, and is the optimum position for receiving the linearly polarized signal. The same position is also optimum for receiving signals of the orthogonal linear polarization in which case the ports with maximum and minimum power will have changed roles.

The system of Fig. 1 has a minimum impact on the existing earth station, since it is easy to install and remove the polarizer from in front of the feed system and thus convert from or revert to original circular polarization, since the antenna and feed system remain conventional in all other respects. It is also noted that this solution is equally applicable to convert dual-circularly polarized earth station antennas into dual-linearly polarized antennas as it is to convert single-circularly polarized antennas into single-linearly polarized antennas.

An embodiment of the invention will now be described with reference to Fig. 2, which illustrates the use of power combiner and differential phase shift circuits in combination with the dual circularly polarized feed system 10. When a linearly polarized wave is transmitted from a satellite to a dual-circularly polarized earth station antenna, it will result in a signal on both the RHCP and the LHCP receive ports 14 and 16, respectively, of the antenna feed system. The two signals will each contain half the power of the original signal, and will have a phase difference depending upon the orientation of the incoming linearly polarized wave with respect to the polarizer of the circularly polarized feed system and the differential path lengths to the ports.

In this embodiment of the invention, the signals from the low noise amplifiers (LNAs) 18 and 20 connected to the RHCP and LHCP ports of the feed system are combined using a 3-dB hybrid 22 providing a 90° differential phase shift. Furthermore, a variable phase shifter 24 is inserted in one of the paths from the LNAs to the hybrid 22. By adjusting the phase shifter 24 while monitoring the signals on the two output ports of the hybrid, an adjustment can be found at which the signal at one port is maximum while it is minimum at the other port.

The position thus established is optimum for the particular orientation of the incident linearly polarized wave. It is also optimum for signals of the orthogonal linear polarization, in which case the two output ports from the hybrid would have reversed roles.

On the transmit side, the operation would be similar, with a linearly polarized signal being provided at one input to the hybrid 30 and split between its two outputs. One of the hybrid outputs would be coupled directly, i.e., with no phase shift, to one of the feed system transmit ports (the LHCP port in the illustrated example) and the other hybrid output would be coupled to the remaining transmit port through a variable phase shifter 32.

By adjusting the phase shifter 32, the spatial polarization orientation of the antenna feed system output can be matched with that of the antenna which will receive the feed system output signal (e.g., an onboard satellite antenna). When the orientation alignments are matched, the maximum power is transferred to the receive antenna and the position is optimum. The optimum alignment of the spatial polarization orientations can be verified by, for example, using a satellite loop-back carrier detection method.

It is noted that this embodiment of the invention will have a minimum impact on any existing earth station design and will allow for quick reversion to original circular polarization operation. It is also noted that this embodiment of the invention is not restricted to the use of hybrids but also applies to simpler power dividers, e.g., a magic tee. However, in that case it is only possible to employ single linear polarization.

Although the above description of one embodiment of this invention is given in terms of transmission from a satellite to an earth station antenna, it is equally applicable to transmission from an earth station to a satellite. It is noted that for the system of Fig. 1 the optimal orientation angle is the same for both transmit and receive signals. On the other hand, for the embodiment of Fig. 2, it is necessary to implement one device to combine the transmit ports and one device to combine the receive ports, and to adjust the phase shifters of each of these circuits independently.

It should be noted that various changes and modifications could be made to the specific examples given above without departing from the spirit and scope of the invention as defined in the appended claims. It is to be emphasized that this embodiment of the invention is applicable to any two orthogonal linear polarizations. Further, while the variable phase shifters are illustrated as being coupled to the transmit and receive RHCP ports, they could instead be in the LHCP paths, or even one in an LHCP path and one in an RHCP path, as long as there is a means for shifting the phase of one received signal relative to another and one transmit signal relative to another.

Still further, while the LNAs 18 and 20 are illustrated as being as close as possible to the feed system consistent with common practice, the two LNAs 18 and 20 could be replaced with a single LNA at one output of the hybrid for reception of a single linear polarization. This would represent a cost savings, but at the expense of higher noise temperature.

## Claims

1. An apparatus responsive to an input signal for transmitting corresponding linearly polarized signals, comprising
a dual-circularly polarized feed system (10) having a left-hand circular polarization (LHCP) transmit port and a right-hand circular polarization (RHCP) transmit port, characterized in that it further comprises
polarization conversion means (30) coupled to said LHCP and RHCP transmit ports and responsive to said input signal for causing said feed system (10) to transmit signals linearly polarized in at least one direction.

2. An appartus according to claim 1, wherein said polarization conversion means (30) causes said feed system (10) to transmit signals linearly polarized in two orthogonal directions.

3. An apparatus according to claim 1, wherein said polarization conversion means (30) comprises power dividing means for receiving at least one signal and dividing it between first and second outputs, and coupling means for coupling one of said outputs to one of said LHCP and RHCP transmit ports while coupling the other of said first and second outputs to the other of said LHCP and RHCP transmit ports with a variable phase shift (32) relative to said first output.

4. An apparatus according to claim 3, wherein said power dividing means is a hybrid divider.

5. An apparatus according to claim 3, wherein said power dividing means comprises a magic tee.

6. An apparatus for receiving linearly polarized signals, comprising
a dual-circularly pdlarized feed system (10) having a left-hand circular polarization (LHCP) receive port and a right-hand circular polarization (RHCP) receive port,
characterized in that it further comprises
polarization conversion means (22) coupled to said LHCP and RHCP receive ports for detecting linearly polarized signals received by said feed system (10), said polarization conversion means (22) having first and second output terminals for providing output signals corresponding respectively to received linearly polarized signals having orthogonal polarizations.

7. An apparatus according to claim 6, wherein said polarization conversion means (22) comprises power combining means for receiving first and second signals at first and second combiner inputs and combining said first and second signals into a combiner output, and coupling means for coupling one of said LHCP and RHCP receive ports to said first combiner input while coupling the other of said LHCP and RHCP receive ports to said second combiner input with a variable phase shift (24) with respect to said first combiner input.

8. An apparatus according to claim 7, wherein said power combining means is a hybrid combiner.

9. An apparatus according to claim 7, wherein said power combining means comprises a magic tee.

10. A method of transmitting linearly polarized signals corresponding to an input signal, via a dual-circularly polarized feed system (10) having a left-hand circular polarization (LHCP) transmit port and a right-hand circular polarization (RHCP) transmit port,
characterized by
passing said input signal to said LHCP and RHCP transmit ports via polarization conversion means (30) to thereby cause said feed system (10) to transmit signals linearly polarized in at least one direction.

11. A method of receiving linearly polarized signals via a dual-circularly polarized feed system having a left-hand circular polarization (LHCP) receive port and a right-hand circular polarization (RHCP) receive port,
characterized by
passing output signals from said LHCP and RHCP receive ports through a polarization converter coupled to said LHCP and RHCP receive ports for detecting linearly polarized signals received by said feed system to first and second output terminals for providing output signals corresponding respectively to received linearly polarized signals having orthogonal polarizations.

## Patentansprüche

1. Vorrichtung, die auf ein Eingangssignal anspricht und entsprechende linear polarisierte Signale aussendet, umfassend:
- ein duales Versorgungssystem (10) für zirkular polarisierte Wellen mit einem Sendeausgang für linksdrehende Zirkularpolarisation (LHCP) und mit einem Sendeausgang für rechtsdrehende Zirkularpolarisation (RHCP),
dadurch gekennzeichnet,
daß die Vorrichtung ferner folgendes aufweist:
eine Polarisations-Wandlereinrichtung (30), die an die LHCP- und RHCP-Sendeausgänge angeschlossen ist und auf das Eingangssignal anspricht, um zu bewirken, daß das Versorgungssystem (10) Signale aussendet, die zumindest in einer Richtung linear polarisiert sind.

2. Vorrichtung nach Anspruch 1,
wobei die Polarisations-Wandlereinrichtung (30) bewirkt, daß das Versorgungssystem (10) Signale aussendet, die in zwei orthogonalen Richtungen linear polarisiert sind.

3. Vorrichtung nach Anspruch 1,
wobei die Polarisations-Wandlereinrichtung (30) eine Leistungs-Teilereinrichtung, um zumindest das eine Signal zu empfangen und es in erste und zweite Ausgangssignale aufzuteilen, sowie eine Kopplungseinrichtung aufweist, um das eine der Ausgangssignale bei dem einen von den LHCP- und RHCP-Sendeausgängen einzukoppeln, während das andere der ersten und zweiten Ausgangssignale bei dem anderen von den LHCP- und RHCP-Sendeausgängen mit einer variablen Phasenverschiebung (32) relativ zum ersten Ausgangssignal eingekoppelt wird.

4. Vorrichtung nach Anspruch 3,
wobei die Leistungs-Teilereinrichtung ein Hybridteiler ist.

5. Vorrichtung nach Anspruch 3,
wobei die Leistungs-Teilereinrichtung ein magisches T aufweist.

6. Vorrichtung zum Empfangen von linear polarisierten Signalen, umfassend:
ein duales Versorgungssystem (10) für zirkular polarisierte Wellen mit einem Empfangseingang für linksdrehende Zirkularpolarisation (LHCP) und einem Empfangseingang für rechtsdrehende Zirkularpolarisation (RHCP),
dadurch gekennzeichnet,
daß die Vorrichtung ferner folgendes aufweist:
eine Polarisations-Wandlereinrichtung (22), die an die LHCP- und RHCP-Empfangseingänge angeschlossen ist, um linear polarisierte Signale abzutasten, die von dem Versorgungssystem (10) empfangen werden, wobei die Polarisations-Wandlereinrichtung (22) erste und zweite Ausgangsanschlüsse besitzt, um Ausgangssignale zu liefern, die jeweils den empfangenen linear polarisierten Signalen entsprechen, die orthogonale Polarisationen haben.

7. Vorrichtung nach Anspruch 6,
wobei die Polarisations-Wandlereinrichtung (22) eine Leistungs-Kombinatoreinrichtung, um erste und zweite Signale an ersten und zweiten Kombinatoreingängen zu empfangen und die ersten und zweiten Signale zu einem Kombinatorausgangssignal zu kombinieren, sowie eine Kopplungseinrichtung aufweist, um den einen von den LHCP- und RHCP-Empfangseingängen mit dem ersten Kombinatoreingang zu koppeln, während der andere von den LHCP- und RHCP-Empfangseingängen mit dem zweiten Kombinatoreingang mit einer variablen Phasenverschiebung (24) bezüglich des ersten Kombinatoreinganges gekoppelt wird.

8. Vorrichtung nach Anspruch 7,
wobei die Leistungs-Kombinatoreinrichtung ein Hybridkombinator ist.

9. Vorrichtung nach Anspruch 7,
wobei die Leistungs-Kombinatoreinrichtung ein magisches T aufweist.

10. Verfahren zum Senden von linear polarisierten Signalen, die einem Eingangssignal entsprechen, über ein duales Versorgungssystem (10) für zirkular polarisierte Wellen mit einem Sendeausgang für linksdrehende Zirkularpolarisation (LHCP) und einem Sendeausgang für rechtsdrehende Zirkularpolarisation (RHCP),
dadurch gekennzeichnet,
daß man das Eingangssignal über eine Polarisations-Wandlereinrichtung (30) zu den LHCP- und RHCP-Sendeausgängen hindurchleitet, um dadurch zu bewirken, daß das Versorgungssystem (10) Signale aussendet, die in zumindest einer Richtung linear polarisiert sind.

11. Verfahren zum Empfangen von linear polarisierten Signalen über ein duales Versorgungssystem für zirkular polarisierte Wellen mit einem Empfangseingang für linksdrehende Zirkularpolarisation (LHCP) und einem Empfangseingang für rechtsdrehende Zirkularpolarisation (RHCP),
dadurch gekennzeichnet,
daß man die Ausgangssignale von den LHCP- und RHCP-Empfangseingängen durch einen Polarisationswandler, der mit den LHCP- und RHCP-Empfangseingängen gekoppelt ist, um linear polarisierte Signale abzutasten, die von dem Versorgungssystem empfangen werden, zu ersten und zweiten Ausgängen leitet, um Ausgangssignale zu liefern, die den jeweiligen empfangenen linear polarisierten Signalen mit orthogonalen Polarisationen entsprechen.

## Revendications

1. Appareil sensible à un signal d'entrée pour transmettre des signaux correspondants polarisés linéairement comportant
un système d'alimentation (10) à polarisation circulaire double ayant un pôle de transmission à polarisation circulaire sinistrorsum (LHCP) et un pôle de transmission à polarisation circulaire dextrorsum (RHCP),
caractérisé en ce qu'il comporte en outre :
des moyens de conversion de polarisation (30) couplés auxdits pôles de transmission LHCP et RHCP et sensibles audit signal d'entrée de façon à avoir pour effet que ledit système d'alimentation (10) transmette les signaux polarisés linéairement dans au moins une direction.

2. Appareil selon la revendication 1, dans lequel les moyens de conversion de polarisation (30) ont pour effet que ledit système d'alimentation (10) transmette les signaux polarisés linéairement dans deux directions orthogonales.

3. Appareil selon la revendication 1, dans lequel lesdits moyens de conversion de polarisation (30) comportent des moyens de division d'énergie pour recevoir au moins un signal et le diviser entre une première et une seconde sorties, et des moyens de couplage, pour coupler une desdites sorties à un desdits pôles de transmission LHCP et RHCP tout en couplant l'autre desdites première et seconde sorties à l'autre desdits pôles de transmission LHCP et RHCP avec un déphasage variable (32) par rapport à ladite première sortie.

4. Appareil selon la revendication 3, dans lequel lesdits moyens de division d'énergie sont un diviseur hybride.

5. Appareil selon la revendication 3, dans lequel lesdits moyens de division d'énergie comportent un té magique.

6. Appareil pour recevoir des signaux polarisés linéairement, comportant un système d'alimentation (10) à polarisation circulaire double ayant un pôle de réception à polarisation circulaire sinistrorsum LHCP et un pôle de réception à polarisation circulaire dextrorsum RHCP, caractérisé en ce qu'il comporte en outre :
des moyens de conversion de polarisation (2) couplés auxdits pôles de réception LHCP et RHCP pour détecter les signaux polarisés linéairement reçus par ledit système d'alimentation (10), lesdits moyens de conversion de polarisation (22) ayant des première et seconde bornes de sortie pour délivrer des signaux de sortie correspondant respectivement aux signaux reçus polarisés linéairement ayant des polarisations orthogonales.

7. Appareil selon la revendication 6, dans lequel lesdits moyens de conversion de polarisation (22) comportent des moyens de combinaison d'énergie pour recevoir des premier et second signaux à des premières et secondes entrées de multiplexeur et combiner lesdits premier et second signaux dans une sortie de multiplexeur, et des moyens de couplage pour coupler un desdits pôles de réception LHCP et RHCP à ladite première entrée de multiplexeur tout en couplant l'autre desdits pôles de réception LHCP et RHCP à ladite seconde entrée de multiplexeur avec un déphasage variable (24) par rapport à ladite première entrée de multiplexeur.

8. Appareil selon la revendication 7, dans lequel lesdits moyens de combinaison de courant sont un multiplexeur hybride.

9. Appareil selon la revendication 7, dans lequel lesdits moyens de combinaison de courant comportent un té magique.

10. Procédé de transmission de signaux polarisés linéairement correspondant à un signal d'entrée, via un système (10) d'alimentation à polarisation circulaire double ayant un pôle de transmission à polarisation circulaire sinistrorsum (LHCP) et un pôle de transmission à polarisation circulaire dextrorsum (RHCP),
caractérisé par le fait que
on passe ledit signal d'entrée auxdits pôles de transmission LHCP et RHCP via les moyens (30) de conversion de polarisation pour ainsi avoir pour effet que ledit système (10) transmette les signaux polarisés linéairement dans au moins une direction.

11. Procédé pour recevoir des signaux polarisés linéairement via un système d'alimentation à polarisation circulaire double ayant un pôle de réception à polarisation circulaire sinistrorsum (LHCP) et un pôle de réception à polarisation circulaire dextrorsum (RHCP),
caractérisé par le fait que
on passe les signaux de sortie desdits pôles de réception LHCP et RHCP par un convertisseur de polarisation couplé auxdits pôles de réception LHCP et RHCP pour détecter les signaux polarisés linéairement reçus par ledit système d'alimentation aux première et seconde bornes de sortie pour fournir des signaux de sortie correspondant respectivement aux signaux reçus polarisés linéairement ayant des polarisations orthogonales.
